# EUROPEAN PATENT APPLICATION

(11) **EP 4 626 061 A1**
(43) Date of publication of application: **01.10.2025**
(21) Application number: 25165323.4
(22) Date of filing: 21.03.2025
(51) Int. Cl.: H04W 24/02, H04B 7/0413

(54) **SYSTEMS AND METHODS FOR O-DU AND O-RU COLLABORATION IN AI/ML ENABLED O-RAN ARCHITECTURES**

(30) Priority: 21.03.2024 US 202463568202 P; 18.03.2025 US 202519083099
(71) Applicant: Mavenir Systems, Inc., Richardson, TX 75081 (US)
(72) Inventor: Yang, Roy, Buffalo Grove, 60089 (US); Demir, Ali Fatih, Allen, 75013 (US)
(74) Representative: Studio Torta S.p.A.

(57) **Abstract**

An optimized Open Radio Access Network (O-RAN) system implementing O-RAN split option 7-2x-based uplink (UL) multiple-input multiple-output (MIMO) operation includes: an O-RAN Radio Unit (O-RU); an O-RAN Distributed Unit (O-DU); and an artificial intelligence or machine learning (AI/ML) module comprising an AI/ML model and associated configurations in at least one of the O-RU and the O-DU. The at least one of the O-RU and the O-DU is configured to: i) determine a beamforming method and associated parameters for at least one endpoint associated with the O-RU; ii) receive measurement data from other one of the O-RU or the O-DU; and iii) modify at least one of the AI/ML model and the associated configurations based on the received measurement data.

## Description

### CROSS-REFERENCE TO RELATED APPLICATIONS

The present application claims priority to US Provisional Patent Application No. 63/568,202 filed on March 21, 2024, the entirety of which is incorporated by reference herein.

### BACKGROUND

### 1. Field of the Invention

The invention is directed to the field of Open Radio Access Network (O-RAN) systems and methods, and relates more particularly to systems and methods for artificial intelligence or machine learning (AI/ML)-enabled O-RU and O-DU architectures that perform intelligent algorithms and parameter selections to optimize the network performance.

### 2. Description of Related Art

Mobile networks, e.g., 4G and 5G New Radio (NR) networks, include a Radio Access Network (RAN) and a Core Network. The RAN base station provides wireless connectivity between the user equipment (UE), e.g., a mobile phone, and the Core Network. Traditionally, the RAN is an integrated unit developed by a single vendor. Although the traditional RAN provides enhanced capabilities with proprietary solutions, mobile network operators generally prefer a more diverse vendor ecosystem. Therefore, Open RAN (O-RAN) standard is being developed by the O-RAN Alliance to create a multi-vendor RAN solution with promised benefits of supply chain diversity, network flexibility, lower cost, and new capabilities leading to increased competition and further innovation.

With the O-RAN standard, the RAN is disaggregated into three main component blocks, i.e., radio unit (RU), distributed unit (DU), and centralized unit (CU). The O-RAN alliance standardizes the protocols and interfaces between these units. The radio frequency (RF) signals are transceived, amplified, and digitized in the RU. The DU and CU are the computation parts of the base station, sending the digitalized signal into the mobile network. The specific RAN functionalities that correspond to each of these three component entities are determined by the functional split points. In the O-RAN split option 7-2x, the physical (PHY) layer functions are distributed between the RU and DU, i.e., an O-RU based on the split option 7-2x architecture can perform the low PHY functionalities (e.g., FFT/IFFT and beamforming), and an O-DU performs the high PHY functionalities (e.g., channel estimation, equalization, demodulation, etc.), which O-DU is connected to the O-RU via the fronthaul (FH) interface. Progress has been made recently to relocate more functionalities to the O-RU to optimize the uplink performance in certain scenarios, such as high mobility and interference.

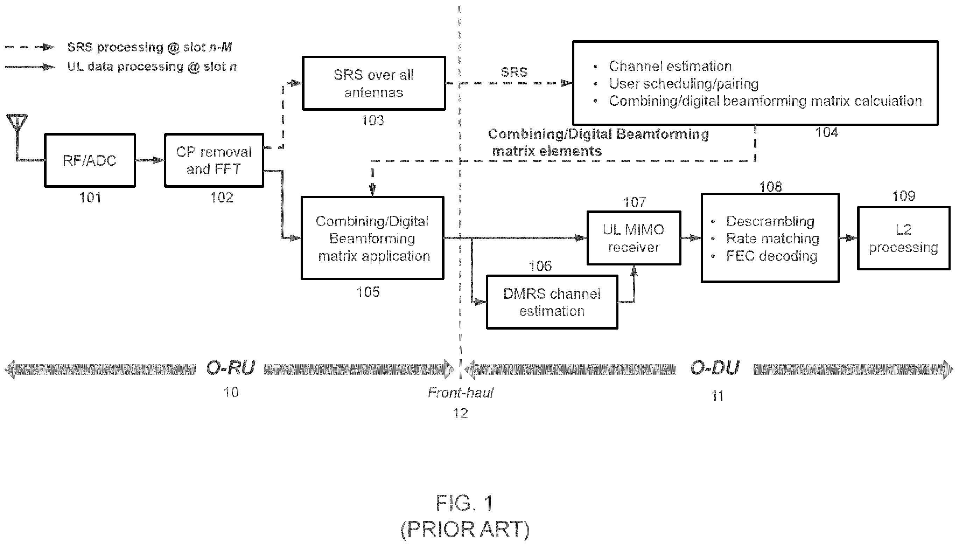

In the context of AI/ML-enabled O-RU and O-DU architectures in O-RAN based Radio Access Networks, O-RAN based on 7-2x architecture enables the utilization of different PHY/Media Access Control (MAC) algorithms along with a wide variety of parameter selections. Depending on the scenario, O-DU and O-RU perform various algorithms that consider throughput, energy consumption, and fronthaul (FH) bit-rate tradeoffs. For example, O-RAN based on 7-2x architecture allows multiple digital beamforming methods at the O-RU. One of the example beamforming methods is weight-based dynamic beamforming (WDBF), and FIG. 1 shows a high-level block diagram of an O-RAN split option 7-2x-based UL massive MIMO (mMIMO) system that can perform current beamforming (BF) methods such as WDBF.

FIG. 1 shows a block diagram of the current O-RAN 7-2x-based UL mMIMO system with an O-RU 10 that has the capability of digital beamforming. Considering weight-based dynamic beamforming (WDBF), the beamforming weights are calculated at an O-DU 11 through SRS channel estimates, and these weights are transferred to the O-DU via the fronthaul. Afterward, the digital beamforming operation is performed at the O-RU using the received weights from the O-RU to reduce the fronthaul bandwidth (FHBW). In this manner, the signal dimension is reduced to *N_{L}* streams from *N_{R}* antennas, where *N_{R} >> N_{L}* for mMIMO O-RAN systems. Outdated SRS channel estimates and reduced signal dimension lead to throughput performance degradation in high mobility and interference environments.

As shown in FIG. 1, the current O-RAN 7-2x-based UL mMIMO system includes the O-RU 10 and the O-DU 11 communicating over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103 for handling SRS over all antennas; and block 105, for handling combining and/or digital beamforming matrix application. On the O-DU side, the following function modules (blocks) are provided: block 104, for handling channel estimation, user scheduling and/or pairing, and combining and/or digital beamforming matrix calculation; block 106, for DMRS channel estimation; block 107, for UL MIMO receiver functionality; block 108, for descrambling, rate matching and FEC decoding; and block 109 for L2 processing. In FIG. 1, the signal flow for SRS processing (starting from block 102 and further involving blocks 103, 104 and 105) is shown by dashed lines, and the signal flow for UL data processing (involving blocks 101, 102, and 105-109) is shown by solid lines. For SRS processing, SRS is transmitted from block 103 to block 104, which in turn transmits combining and/or digital beamforming matrix elements to block 105.

In WDBF, the beamforming weights are calculated at O-DU through SRS channel estimates, and these weights are transferred to the O-RU via the fronthaul. Afterward, the digital beamforming operation is performed at O-RU using the received weights from O-RU to reduce the fronthaul bandwidth (FHBW). In this way, the signal dimension is reduced to *N_{L}* streams from *N_{R}* antennas, where *N_{R}>>N_{L}* for mMIMO O-RAN systems.

For typical scenarios, WDBF provides sufficient throughput performance while balancing FH bit rate consumption and O-RU computational complexity. However, in certain scenarios, such as high mobility and high interference, DMRS-BF is preferable, although it increases computational complexity and O-RU energy consumption. Hence, the beamforming algorithm selection is very critical to optimize the key performance indicators (KPIs) jointly between the O-DU and the O-RU, and it is only one of many example attributes that needs to be chosen carefully to boost the radio access network performance.

In the context of systems and methods for AI/ML-enabled O-RU and O-DU architectures that perform intelligent algorithms and parameter selections to optimize the network performance, an O-RU based on O-RAN split option 7-2x architecture can currently perform the low PHY functionalities (e.g., FFT/IFFT and beamforming), and O-DUs perform the high PHY functionalities (e.g., channel estimation, equalization, and demodulation). Soon, it is expected that there will be more functionalities at O-RU to optimize the uplink performance in certain scenarios, such as high mobility and interference. For example, in the near future, the O-DU and O-RU may exchange limited information related to their PHY functionalities and capabilities through manual configuration. In this context, PHY/MAC layer operations within O-DUs and O-RUs can be optimized using AI/ML, but there is no mechanism in the fronthaul (i.e., the interface between O-DU and O-RU) for collaboration to optimize AI/ML models or sharing the AI/ML models.

Therefore, there is a need for systems and methods for O-DU and O-RU collaboration to optimize AI/ML models or sharing the AI/ML models.

### SUMMARY

Accordingly, it is desired to provide a system and method for O-DU and O-RU collaboration to optimize AI/ML-enabled O-RAN architectures that lead to a performance improvement in an energy and fronthaul bandwidth-efficient manner.

According to an example embodiment, given the ever-evolving O-RAN split option 7-2x architecture embraces new functionalities and new functional partitions between the O-DU and O-RU, where the algorithm details and performance characteristics of vendor-specific O-DU and O-RU may not be visible to each other, collaboration mechanisms between O-DU and O-RU are implemented such that the O-DU and O-RU can exchange AI/ML capability, set up and train an AI/ML model through data collection, optimize the AI/ML model through reinforcement learning, and share the AI/ML model with other O-DU, O-RU or other network entities.

According to an example embodiment, a system and a method are provided in which an O-DU has AI/ML capabilities, and an O-RU does not (or does not use these capabilities in collaboration with O-DU), and depending on the scenario, the O-DU performs various algorithm and parameter selections that consider throughput, energy consumption, and fronthaul (FH) bit-rate tradeoffs.

According to an example embodiment, a system and a method are provided in which an O-RU has AI/ML capabilities, and an O-DU does not (or does not use these capabilities to collaborate with O-RU), and depending on the scenario, the O-RU performs various algorithm and parameter selections that consider throughput, energy consumption, and fronthaul (FH) bit-rate tradeoffs.

According to an example embodiment, a system and a method are provided in which both the O-RU and the O-DU have AI/ML capabilities, and depending on the scenario, both the O-DU and the O-RU perform various algorithm and parameter selections that consider throughput, energy consumption, and fronthaul (FH) bit-rate tradeoffs.

According to an example embodiment, a system and a method are provided in which a federated learning mechanism is provided, e.g., while training the AI/ML model between an O-DU and an O-RU, the O-DU can interwork with several O-RUs at the same time.

According to an example embodiment, a system and a method are provided in which the AI/ML model or models that have been trained in one O-DU may be shared with another O-DU i) through an interface (such as Xn interface) that has a similar O-RU with or without AI/ML capability, or ii) such sharing may be carried out by a network management node where the O-DU may upload the trained AI/ML model to the network management node and subsequently send it to another O-DU upon request.

### BRIEF DESCRIPTION OF THE DRAWINGS

FIG. 1 shows a block diagram of the current O-RAN 7-2x-based UL mMIMO system with an O-RU that has the capability of digital beamforming.
FIG. 2 shows a block diagram of an example embodiment of a UL mMIMO O-RAN system with an O-RU that has DMRS extraction and DMRS processing capabilities (which O-RU is referred to as DMRS-BF-NEQ O-RU in the present specification).
FIG. 3 shows a block diagram of an example embodiment of a UL mMIMO O-RAN system with an O-RU that has DMRS extraction, DMRS processing, and equalization capabilities (which O-RU is referred to as DMRS-BF-EQ O-RU in the present specification).
FIG. 4 illustrates block diagrams of one-sided and two-sided AI/ML Solutions in the O-RAN FH Interface.
FIG. 5 illustrates an example AI/ML Model for the BF method selection.
FIG. 6 illustrates an example of FH messaging signal flow when a one-sided AI/ML model resides on an O-DU.
FIG. 7 illustrates an example of FH messaging signal flow when a one-sided AI/ML model resides on an O-RU.
FIG. 8 illustrates an example of FH messaging signal flow for a two-sided AI/ML model between O-DU and O-RU.
FIG. 9 illustrates an example signal flow in a two-sided AI/ML model having portions in each of O-DU and O-RU.
FIG. 10 illustrates an example of FH messaging signal flow for a federated learning scheme in which an O-DU can interwork with multiple O-RUs.
FIG. 11 illustrates an example signal flow involved in sharing the AI/ML model among two O-DUs and an O-RU.

### DETAILED DESCRIPTION

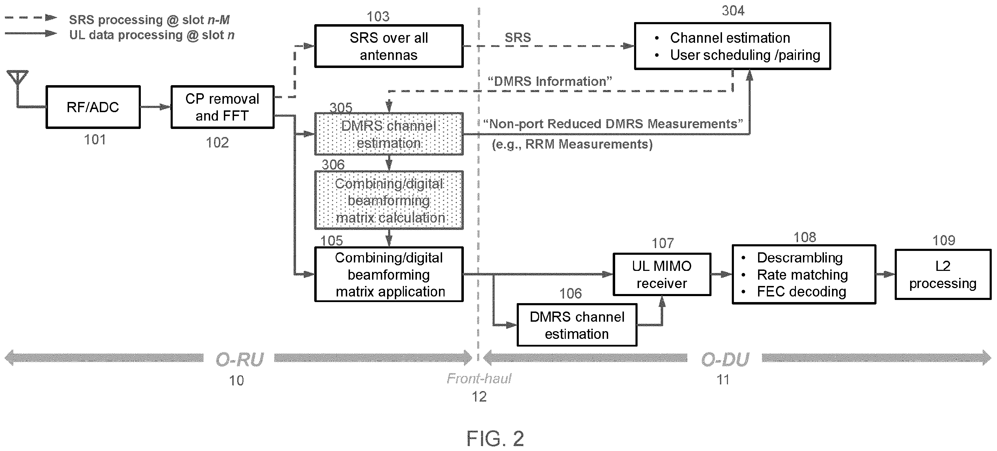

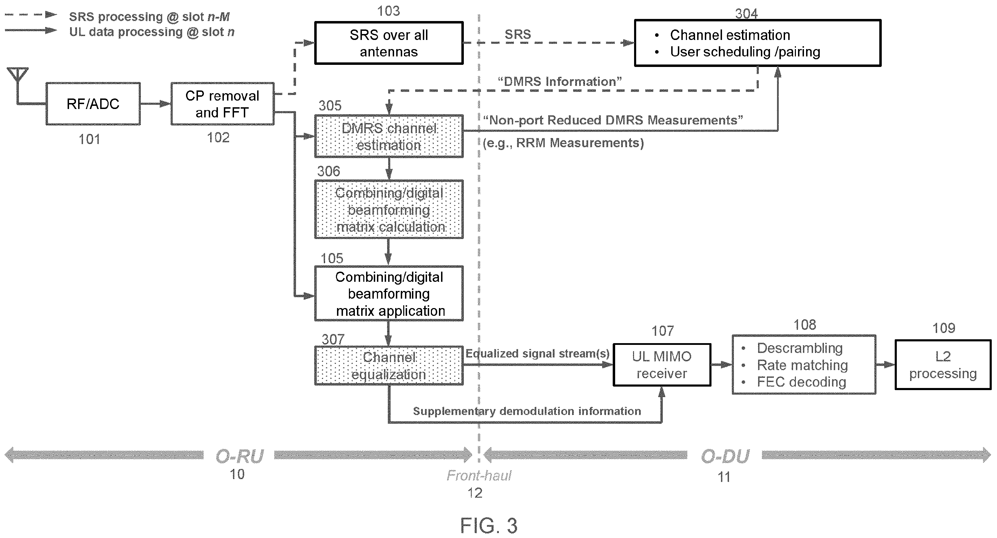

FIGS. 2 and 3 illustrate two different variations of the upcoming DMRS-BF that are referred to as DMRS-BF-NEQ (FIG. 2), i.e., a version of DMRS-BF in which no equalization (NEQ) at the O-RU is implemented, and DMRS-BF-EQ (FIG. 3), i.e., version of DMRS-BF in which equalization operation at the O-RU is implemented. Each of these are explained in detail below. In DMRS-BF, the O-DU sends the necessary DMRS information, which is required to extract DMRS, to the O-RU via the fronthaul. Afterward, the beamforming weights are calculated at O-RU through DMRS channel estimates. Subsequently, the digital beamforming operation is performed at O-RU using the calculated weights to reduce the FHBW, similar to WDBF.

FIG. 2 shows a block diagram of an example embodiment of a UL mMIMO O-RAN system with an O-RU that has DMRS extraction and DMRS processing capabilities (which O-RU is referred to as DMRS-BF-NEQ O-RU in the present specification). FIG. 3 shows a block diagram of an example embodiment of a UL mMIMO O-RAN system with an O-RU that has DMRS extraction, DMRS processing, and equalization capabilities (which O-RU is referred to as DMRS-BF-EQ O-RU in the present specification).

In the example embodiment of the UL mMIMO O-RAN system shown in FIG. 2, the O-DU 11 sends the necessary DMRS information, which is required to extract DMRS, to the O-RU 10 (which is a DMRS-BF-NEQ O-RU). The O-RU 10 extracts and processes DMRS to improve the system performance by replacing and/or improving SRS-based beamforming weights with DMRS-based beamforming weights. In addition, the O-RU 10 can send "non-port reduced DMRS measurements" (which measurements are not possible to calculate at the O-DU 11 with high precision) to the O-DU 11 to further improve the system performance.

As shown in FIG. 2, the O-RU 10 and the O-DU 11 communicate over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103 for handling SRS over all antennas; block 305 for handling DMRS channel estimation (based on DMRS information, which is used to extract/calculate, e.g., "non-port reduced DMRS symbols" and "non-port reduced DMRS measurements"); block 306 for handling combining and/or digital beamforming matrix calculation; and block 105, for handling combining and/or digital beamforming matrix application. On the O-DU side, the following function modules (blocks) are provided: block 304, for handling channel estimation and user scheduling and/or pairing; block 106, for DMRS channel estimation; block 107, for UL MIMO receiver functionality; block 108, for descrambling, rate matching and FEC decoding; and block 109 for L2 processing. The term "non-port reduced DMRS symbols" refers to the DMRS symbols from all (multiple) antenna streams before the digital beamforming operation. In addition, the term "non-port reduced DMRS measurements" refers to the measurements and/or estimations that are derived from the "non-port reduced DMRS symbols," e.g., measurements and/or estimations such as "signal-to-noise-plus-interference" and/or "UE timing advance" estimations.

In FIG. 2, the signal flow for SRS processing (starting from block 102 and further involving blocks 103, 304 and 305) is shown by dashed lines, and the signal flow for UL data processing (involving blocks 101, 102, 305-306 and 105-109) is shown by solid lines. For SRS processing, SRS is transmitted from block 103 to block 304, and block 304 performs channel estimation (as well as various measurements) and user scheduling/pairing using the received SRS signal. Also, block 304 transmits DMRS information (which is used for extracting/calculating, e.g., "non-port reduced DMRS symbols" and "non-port reduced DMRS measurements") to block 305. As part of the UL data processing signal flow, output of block 305 can be sent to block 304 (e.g., sending "non-port reduced DMRS measurements", such as RRM measurements), as well as to block 306.

In the example embodiment shown in FIG. 2, the O-RU 10 performs DMRS channel estimation in the block 305 for the main purpose of calculating the beamforming weights. Thereafter, the O-DU 11 performs DMRS channel estimation (in the block 106) to perform equalization and several other channel-estimation-based PHY processing. Even though the DMRS channel estimation is performed twice in the example embodiment shown in FIG. 2, the respective outcomes are not the same, i.e., DMRS channel estimation at the O-RU 10 (in the block 305) carries more information since it is performed based on "non-port reduced DMRS symbols".

In the example embodiment of the UL mMIMO O-RAN system shown in FIG. 3, the O-RU 10 (which is a DMRS-BF-EQ O-RU) has the capability for DMRS extraction and DMRS processing to improve system performance. The O-RU 10 of FIG. 3 additionally performs equalization and sends the equalized signal stream(s) along with the supplementary demodulation information to the O-DU 11. Moreover, the O-RU 10 can send "non-port reduced DMRS measurements" (which are not possible to calculate at the O-DU 11 with high precision) to the O-DU 11 to further improve the system performance.

As shown in FIG. 3, the O-RU 10 and the O-DU 11 communicate over the fronthaul 12. On the O-RU side, the following function modules (blocks) are provided: block 101, for handling radio frequency (RF) signal and analog-to-digital conversion (ADC); block 102, for handling cyclic prefix (CP) removal and FFT; block 103 for handling SRS over all antennas; block 305 for handling DMRS channel estimation (based on DMRS information, which is used to extract/calculate, e.g., "non-port reduced DMRS symbols" and "non-port reduced DMRS measurements"); block 306 for handling combining and/or digital beamforming matrix calculation; block 105, for handling combining and/or digital beamforming matrix application; and block 307 for handling channel equalization. On the O-DU side, the following function modules (blocks) are provided: block 304, for handling channel estimation and user scheduling and/or pairing; block 107, for UL MIMO receiver functionality; block 108, for descrambling, rate matching and FEC decoding; and block 109 for L2 processing.

In FIG. 3, the signal flow for SRS processing (starting from block 102 and further involving blocks 103, 304 and 305) is shown by dashed lines, and the signal flow for UL data processing (involving blocks 101, 102, 305-307, 105 and 107-109) is shown by solid lines. For SRS processing, SRS is transmitted from block 103 to block 304, and block 304 performs channel estimation (as well as various measurements) and user scheduling/pairing using the received SRS signal. Also, block 304 transmits DMRS information (which is used for extracting/calculating, e.g., "non-port reduced DMRS symbols" and "non-port reduced DMRS measurements") to block 305. As part of the UL data processing signal flow, output of block 305 can be sent to block 304 (e.g., sending "non-port reduced DMRS measurements", such as RRM measurements), as well as to block 306. In the example embodiment shown in FIG. 3, the O-RU 10 performs DMRS channel estimation in the block 305 for the main purpose of calculating the beamforming weights.

The evolution of O-RAN split option 7-2x-based architecture embraces new functionalities and features which require careful decision-making in terms of algorithm and parameter selection. This consideration is particularly important when the O-DUs and O-RUs, which can be built by different vendors, operate in an environment with diverse scenarios and requirements. In addition, the different O-DU and O-RU vendors may not fully disclose their algorithm details to each other, in which case the O-DUs and the O-RUs may operate as semi-black boxes. In order to address these shortcomings, according to the present disclosure, the O-DUs and O-RUs can utilize artificial intelligence (AI) and/or machine learning (ML) algorithms to optimize their performance. For example, in accordance with the present disclosure, O-DUs and O-RUs can monitor and evaluate each other's algorithms and take action(s) for optimal algorithm selection and/or parameter selection on both sides. In an example embodiment, the inference data may be requested by the utilized AI/ML model through various data collection requests.

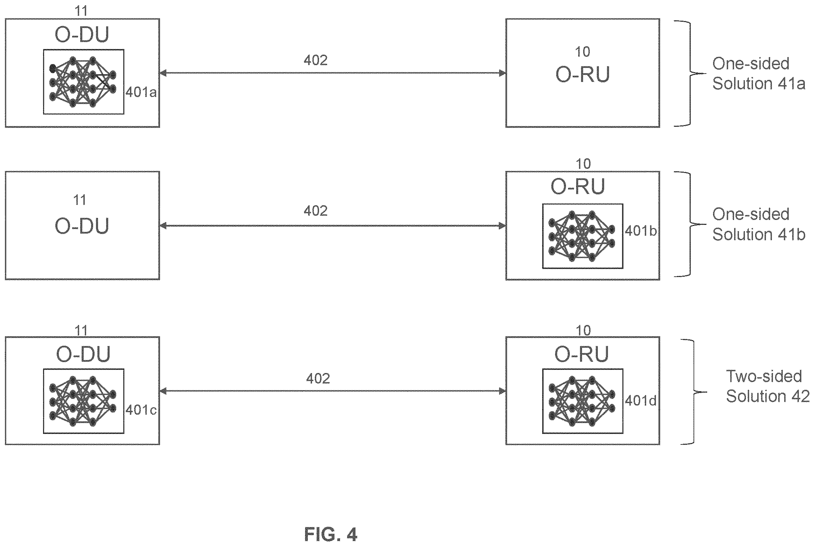

As depicted in FIG. 4, AI/ML solutions for the fronthaul (FH) interface 402 can be categorized into two types. One-sided solutions shall have the AI/ML module (algorithm) deployed in either the O-DU 11 or the O-RU 10. The example one-sided solution 41a implements the AI/ML module (algorithm) 401a in the O-DU 11. The example one-sided solution 41b implements the AI/ML module (algorithm) 401b in the O-RU 10. The example two-sided solution 42 implements the AI/ML module (algorithm) in two parts, e.g., 401c in the O-DU 11 and 401d in O-RU 10, and the two parts are operated jointly. In accordance with the present disclosure, collaboration between the O-RU and the O-DU via O-RAN signaling over the fronthaul interface is implemented in the context of both the one-sided solution and the two-sided solution to ensure optimal performance, efficiency, and interoperability between the O-RU and the O-RU, as well as enabling continual improvement of the underlying AI/ML model based on measurement data and monitoring.

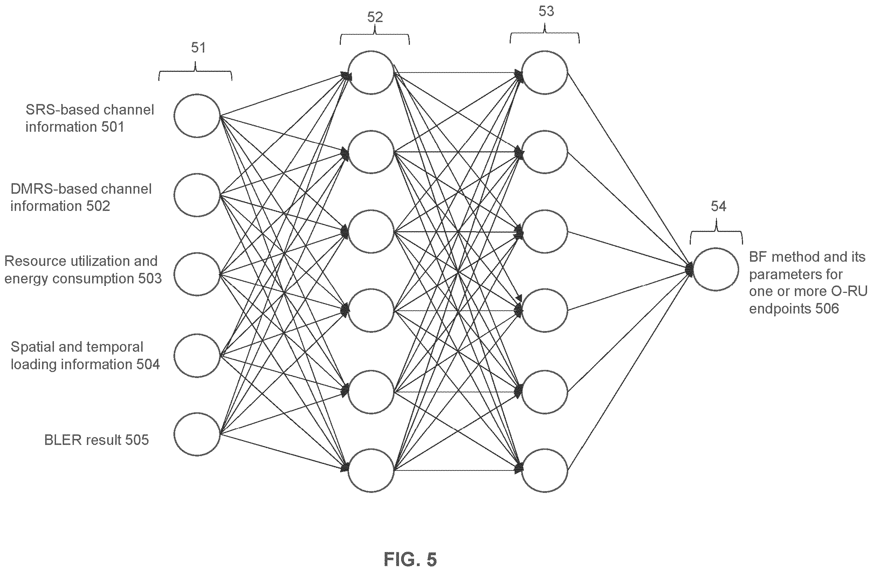

According to a first example embodiment of the system and method, the AI/ML module (algorithm) is provided in the O-DU, and the O-RU does not have the AI/ML capability (and/or does not use the AI/ML capability in collaboration with the O-DU). The O-DU is configured to perform, depending on the operational scenario, various algorithm and/or parameter selections based on considerations of, e.g., throughput, energy consumption, and fronthaul (FH) bit-rate tradeoffs. FIG. 5 is a block diagram illustrating an example AI/ML neural network model utilized by the AI/ML module, e.g., for beamforming (BF) method selection. As shown in FIG. 5, the example AI/ML neural network model includes at least one input layer 51, hidden (intermediate) layers 52 and 53, and at least one output layer 54, with each layer comprising one or more neural network nodes. The hidden (intermediate) layers 52 and 53 transform the input into something that the output layer can use.

In the example of FIG. 5, one or more of the following inputs can be provided to the input layer 51: sounding reference signal (SRS)-based channel information 501; Demodulation Reference Signal (DMRS)-based channel information 502; resource utilization and energy consumption 503; spatial and temporal loading information 504; and Block Error Rate (BLER) result 505. Specific examples of each of these input types are listed below:
i) SRS-based channel information 501: Channel estimation, channel covariance, signal power estimation, noise power estimation, interference power estimation, interference plus noise power estimation, signal-to-noise ratio (SNR), signal-to-interference plus noise ratio (SINR), time offset estimation, and frequency offset estimation based on the SRS signals of the UEs.
ii) DMRS-based channel information 502: Channel estimation, channel covariance, signal power estimation, noise power estimation, interference power estimation, interference plus noise power estimation, signal-to-noise ratio (SNR), signal-to-interference plus noise ratio (SINR), time offset estimation, and frequency offset estimation based on port-reduced and/or non-port-reduced DMRS signals of the UEs.
iii) Resource utilization and energy consumption 503: For this input type, O-RU can send an indication of the current O-RU memory usage and/or million instructions per second (MIPS) usage, in addition to an estimation of the current power consumption for its PHY operations (e.g., channel estimation and beamforming) along with their processing steps. In addition, O-DU's resource utilization and/or energy consumption can be included as part of the input.
iv) Spatial and temporal loading information 504: This input type can include a time series of historical loading, e.g., buffer occupancy and spatial distribution of the user traffic. These inputs can be used to predict the sector loading estimation.
v) Block Error Rate (BLER) result 505: This input type, which can be obtained from the O-DU decoder, can include historical cyclic redundancy check (CRC) results. This input provides evidence of the effectiveness of the selected algorithms and parameters for specific O-RU endpoints.

The above-described example inputs to the AI/ML model can come from the O-DU and/or the O-RU, depending on the measurement and reporting capabilities of the O-DU and the O-RU, as well as the desired configuration. The output layer 54 of the AI/ML model can include an algorithm and/or parameter selection(s) for, e.g., mMIMO operation. For example, in the context of beamforming, upon considering multiple beamforming algorithms and parameters, the output can indicate an optimal beamforming algorithm method (e.g., WDBF or DMRS-BF) and its parameters for one or more O-RU endpoints.

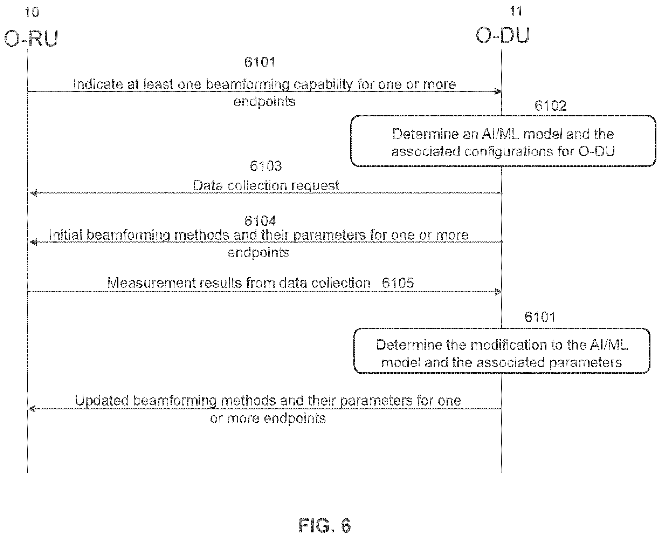

FIG. 6 shows an example signaling mechanism over the open fronthaul (FH) interface for utilizing an AI/ML model in an O-DU 11, which communicates with an O-RU 10 to manage the beamforming configuration for different endpoints in the O-RU 10. First, as referenced by 6101, the O-RU 10 can send a list of beamforming capabilities (or at least one beamforming capability) and parameter(s) for one or more endpoints (O-RUs) to the O-DU 10, which beamforming capabilities and parameter(s) can include, e.g.,: the supported beamforming methods (e.g., Wideband Digital Beamforming (WDBF), ULPI with no equalizer (ULPI-NEQ), ULPI with equalizer (ULPI-EQ), etc.); time and/or frequency granularity; and continuity boundaries. Next, as referenced by 6102, the O-DU 11 determines an optimal AI/ML model with the associated configurations (e.g., number of layers, weights at each neural node, etc.) based on the beamforming capabilities and parameter(s) received from the O-RU 10. Subsequently, as referenced by 6103, the O-DU 11 can send a data collection request to the O-RU 10, e.g., to request the list of the measurement data that is required as input to the AI/ML model in the O-DU. Such measurement data can include, but is not limited to, inter-layer correlations, interference measurements, UE-specific data (e.g., timing offset and frequency offset estimation, SINR), energy-saving related parameters (e.g., power consumption), and memory allocations in the O-RU.

The output of the O-DU AI/ML model can be in the form of the beamforming method for each endpoint and the associated parameters, which may include but is not limited to, the beamforming method in SU or MU settings for one or more endpoints, the corresponding beamforming parameters such as granularity, continuity configurations.

After the O-DU sends the beamforming methods and the associated parameters to the O-RU and O-RU executes accordingly, the O-RU sends the list of measurement data to the O-DU, the O-DU may dynamically modify the AI/ML model processing (e.g., through reinforcement learning) based on the changing operating conditions and improve the performance and efficiency of the O-DU and O-RU network. Subsequently, the O-DU may send the updated beamforming methods and the associated parameters to the O-RU, which reflects the modified AI/ML model.

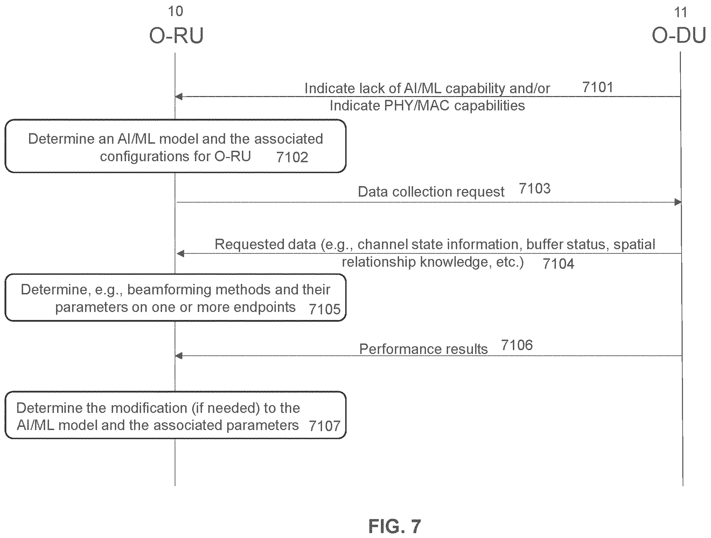

FIG. 7 shows an example signaling mechanism over the open fronthaul (FH) interface for utilizing an AI/ML model in an O-RU 10, which communicates with an O-DU 11 (which O-DU does not have AI/ML capabilities, or does not use AI/ML capabilities to collaborate with the O-RU) to manage the beamforming configuration for different endpoints in the O-RU 10. To implement the AI/ML solution over the FH, the O-DU i) feeds the input data to the O-RU AI/ML model, and ii) shifts the responsibility of algorithm and parameter selection (e.g., beamforming method determination and its parametrization) to the O-RU. Depending on the scenario, O-RU performs various algorithm and parameter selections that consider throughput, energy consumption, and fronthaul (FH) bit rate tradeoffs.

First, as referenced by 7101 in FIG. 7, the O-DU 11 can indicate to the O-RU 10 that i) the O-DU 11 does not have AI/ML capability and/or indicate the O-DU's PHY/MAC capabilities, e.g., UE scheduling. Next, as referenced by 7102, the O-RU 10 determines an AI/ML model and the associated configurations for the O-RU. Subsequently, as referenced by 7103, the O-RU 10 can send a data collection request to the O-DU 11, which request can include, e.g., a list of inputs that the O-RU's AI/ML model can use. As referenced by 7104, the O-DU 11 can respond with the data requested by the O-RU, e.g., channel state information (such as SRS-based channel information and/or DMRS-based channel information), buffer status, resource utilization, O-DU energy consumption, spatial and temporal loading information, spatial relationship knowledge, BLER performance, and scheduling priority, etc. As referenced by 7105, the O-RU AI/ML model utilizes the input from the O-DU 11 to determine the optimal algorithm(s) and its parameters, e.g., the beamforming method(s) and its associated parameters for one or more endpoints. It should be noted that the determined algorithm(s) and its parameters can be conveyed internally within the O-RU 10. Subsequently, as referenced by 7106, the O-DU 11 can send the performance-related results (e.g., FEC results or the equalization performance) to the O-RU's AI/ML model as input. As referenced by 7107, the AI/ML model of the O-RU 10 utilizes the input to determine any modification that needs to be made to the configuration of the AI/ML model or at least one of the parameters of the model. It should be noted that, when the AI/ML model is located in the O-RU, the exemplary AI/ML model shown in FIG. 5 can still apply, but the specific location of the inputs may change.

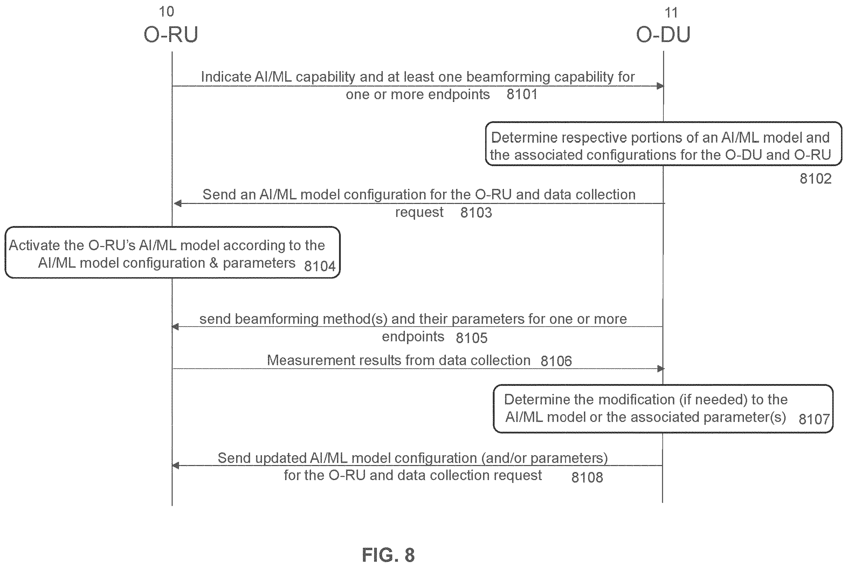

In the example embodiment of a system and a method illustrated in FIG. 8, both the O-RU 10 and the O-DU 11 have AI/ML capabilities, and depending on the scenario, both the O-RU 10 and the O-DU 11 perform various algorithm(s) and parameter selection(s) that consider, e.g., throughput, energy consumption, and fronthaul (FH) bit rate tradeoffs. FIG. 8 shows an example of FH signaling flow between the O-RU 10 and the O-DU 11 for implementing this AI/ML-enabled O-RAN architecture. As referenced by 8101, the O-RU 10 can indicate to the O-DU 11 i) that the O-RU 10 has AI/ML capability, and ii) at least one beamforming capability for one or more endpoints. As referenced by 8102, the O-DU 11 can determine a first portion of the AI/ML model (for the O-DU) and a second portion of the AI/ML model (for the O-RU 10), whereby the AI/ML models on the O-DU and O-RU perform j oint operations that aim to improve the overall performance and efficiency of the O-DU and O-RU system. As referenced by 8103, the O-DU 11 can send the second portion of the AI/ML model configuration (and associated parameters), as well as data collection request, to the O-RU 10. The data collection request can include, e.g., SRS-based channel information, DMRS-based channel information, resource utilization and energy consumption, spatial and temporal loading information, BLER performance, scheduling priority, etc., as exemplified in connection with the first example embodiment illustrated in FIG. 6. As referenced by 8104, the O-RU 10 can activate the O-RU AI/ML model according to the AI/ML model configuration and parameters received from the O-DU 11.

Subsequently, as referenced by 8105, the O-DU 11 can send the beamforming method(s) and the associated parameters to the O-RU 10 for one or more endpoints. After the execution of the beamforming, the O-RU 10 can send (as referenced by 8106) the list of measurement results from data collection) back to O-DU 11. The O-DU 11 utilizes the measurement results received from the O-RU 10 and O-DU's own performance results (e.g., CRC results) to determine any modification that needs to be made to the configuration of the AI/ML model or at least one of the parameters of the AI/ML model in the O-DU or O-RU is required, as referenced by 8107. If the O-RU's AI/ML model portion needs to be updated, the O-DU sends the updated AI/ML model configuration and/or associated parameters (along with a data collection request) to the O-RU 10.

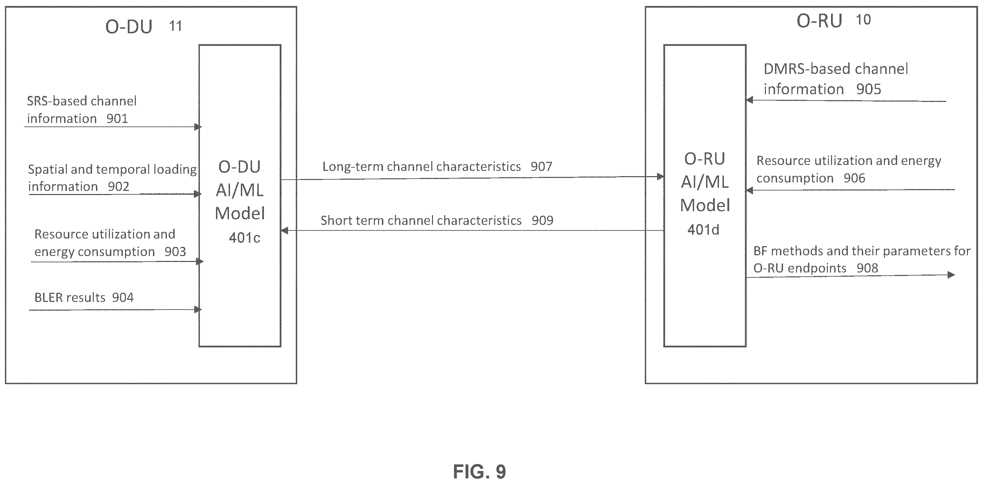

FIG. 9 is a signal diagram illustrating the signal flow and processing in an example two-sided AI/ML model in which the overall AI/ML algorithms are split between the O-DU portion and the O-RU portion. In an example embodiment, the two portions can complement each other, e.g., the longer-term inference function can be located in the O-DU, whereas the shorter-term inference function can be located in the O-RU. The O-DU 11 has the O-DU AI/ML model 401c, to which the following information items are fed: SRS-based channel information 901; spatial and temporal loading information 902; resource utilization and energy consumption 903 in the O-DU, and BLER results 904. The O-RU 10 has the O-RU AI/ML model 401d, to which the following information items are fed: DMRS-based channel information 905; and resource utilization and energy consumption 906 in the O-RU.

In the example embodiment shown in FIG. 9, the O-DU AI/ML model 401c in the O-DU 11 interacts with the O-RU AI/ML model 401d in the O-RU 10 via fronthaul (FH) communication. The downstream (O-DU 11 to O-RU 10) fronthaul traffic can include long-term channel characteristics 907 (tens of slots or longer), e.g., a certain representation by the O-DU AI/ML model of the SRS-based channel information, spatial and temporal loading information, resource utilization and energy consumption in the O-DU, and BLER results. The O-RU AI/ML model 401d uses as input(s) the long-term channel characteristics 907 and one or more of other information, e.g., the DMRS-based channel information 905, resource utilization and energy consumption 906 in the O-RU, to produce the output of the O-RU AI/ML model 401d, e.g., respective beamforming method(s) and their parameters for one or more endpoints of the O-RU, as referenced by 908. The upstream (O-RU 10 to O-DU 11) FH traffic can include short-term channel characteristics 909 (one or a few slots), e.g., a certain representation by the O-RU AI/ML model of the DMRS channel information (e.g., channel estimation, channel covariance, interference estimation, DMRS-based beamforming weights, frequency and timing offsets, etc.) and the O-RU resource utilization and energy consumption.

For the example embodiment explained in connection with FIG. 9, the representation of the long-term or short-term channel characteristic can be implemented, e.g., as an autoencoder/decoder pair between the O-DU and the O-RU. To verify the effectiveness of the Al/ML-model-based beamforming, the throughput performance of the O-DU 11 and O-RU 10 can be assessed based on the BLER and/or energy efficiency through reinforcement learning.

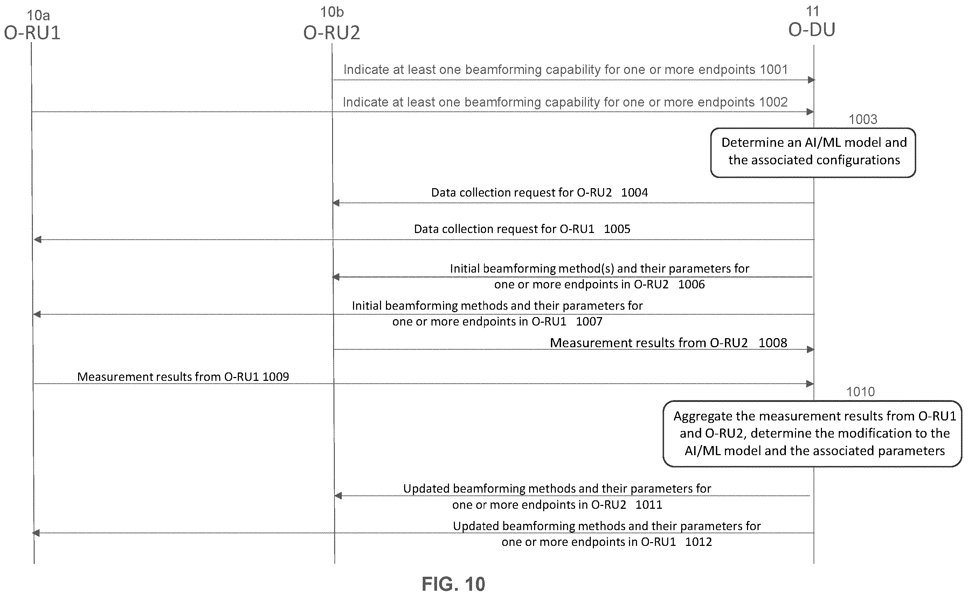

FIG. 10 is a signal diagram illustrating the signal flow and processing in an example embodiment implementing a federated learning mechanism to realize the proposed AI/ML-enabled O-RAN architecture. According to the example embodiment shown in FIG. 10, for training and/or selecting the AI/ML model in the O-DU 11, the O-DU 11 can interwork with multiple O-RUs (e.g., O-RUs 10a and 10b) at the same time, which individual O-RUs can often have limited processing and/or storage capacity for large-scale model training.

As shown in FIG. 10, the O-RU2 10b sends to O-DU 11 (as referenced by 1001) an indication of at least one beamforming capability for one or more endpoints, and the O-RU1 10a sends to O-DU 11 (as referenced by 1002) an indication of at least one beamforming capability for one or more endpoints. Subsequently, as referenced by 1003, the O-DU 11 determines an AI/ML model and the associated configurations. This is followed by the O-DU 11 sending of i) a data collection request for the O-RU2 10b (as referenced by 1004), and ii) a data collection request for the O-RU1 10a (as referenced by 1005). Next, the O-DU 11 sends i) initial beamforming method(s) and their parameters for one or more endpoints in O-RU2 10b (as referenced by 1006), and ii) initial beamforming method(s) and their parameters for one or more endpoints in O-RU1 10a (as referenced by 1007). The O-RU2 10b sends measurement results (as referenced by 1008) to the O-DU 11, and O-RU1 10a sends measurement results (as referenced by 1009) to the O-DU 11. As referenced by 1010, the O-DU 11 aggregates the measurement results (which can be used, e.g., as inference data) from O-RU1 10a and O-RU2 10b, and determines any modification(s) (if needed) to the AI/ML model and the associated parameters. Subsequently, the O-DU 11 sends i) updated beamforming method(s) and their parameters for one or more endpoints in O-RU2 10b (as referenced by 1011), and ii) updated beamforming method(s) and their parameters for one or more endpoints in O-RU1 10a (as referenced by 1012).

Although the example embodiment illustrated in FIG. 10 is explained in connection with a beamforming method selection, the present disclosure is not limited to a beamforming method selection, and other PHY/MAC algorithm(s) and their parameterization can be optimized with a federated learning mechanism to realize the proposed AI/ML O-RAN architecture. In addition, the AI/ML model at the O-DU can aggregate data from multiple O-RUs built by different vendors. The federated learning mechanism according to the present disclosure enables improving the AI/ML model i) without requiring a direct collaboration between the O-RUs from different vendors, and ii) without sharing sensitive information about the O-RUs or disclosing details regarding their design and algorithms. Furthermore, although the example embodiment illustrated in FIG. 10 considers a one-sided AI/ML model at the O-DU, a similar federated learning mechanism can be achieved with a two-sided AI/ML model using AI/ML capable O-RUs, e.g., as described in connection with the example embodiment illustrated in FIG. 8.

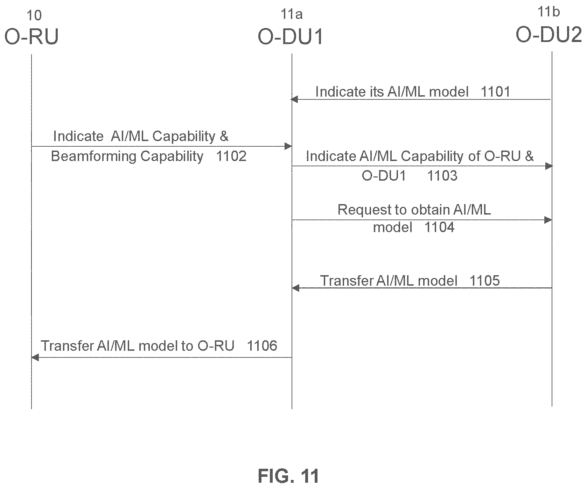

FIG. 11 is a signal diagram illustrating the signal flow and processing in an example embodiment implementing the sharing of AI/ML-based learning among O-DUs and at least one O-RU. This example embodiment leverages the fact that the O-DUs and/or O-RUs from the same vendor most likely exhibit the same performance characteristics in PHY operations, e.g., beamforming processing, so it is advantageous for the O-DUs and/or the O-RUs to share the AI/ML model if AI/ML capability is supported by the O-DUs and the O-RUs. Accordingly, an AI/ML model that has been trained in one O-DU can be shared with another O-DU through an interface (e.g., an Xn interface) that has an associated O-RU (with or without AI/ML capability). Alternatively, such sharing may be implemented by utilizing a network management node, e.g., the O-DU can upload the trained AI/ML model to the network management node, which can subsequently send it to another O-DU upon request.

In the example embodiment shown in FIG. 11, it is assumed that an AI/ML model has been trained and is hosted at the O-DU2 11b, which sends (as referenced by 1101) an indication of the AI/ML model and associated information (e.g., such as the layer configuration and weights at each neural node of the AI/ML model) to the O-DU1 11a. In addition, O-RU 10 sends to O-DU1 11a (as referenced by 1102) an indication of its AI/ML capability and at least one beamforming capability for one or more endpoint (it should be noted that beamforming is just one example use case, and other capabilities can be indicated). O-DU1 11a can send O-RU 10's AI/ML capability as well as O-DU1 11a's AI/ML capability to O-DU2 11b, e.g., through an Xn interface, as referenced by 1103. In addition, as referenced by 1104, the O-DU1 11a can send a request to obtain the AI/ML model from O-DU2 11b. In response, the O-DU2 11b can send (as referenced by 1105) an AI/ML model to O-DU1 11a. In addition, depending on the O-RU 10's AI/ML capability, the O-DU1 11a can send (as referenced by 1106) the AI/ML model to the O-RU 10 through the FH interface.

It should be noted that although the example embodiment illustrated in FIG. 11 shows the AI/ML model sharing from an O-DU (O-DU2 11b), an O-RU can share its AI/ML model with other O-DUs and/or O-RUs, as well. In addition, in an alternative example embodiment, the AI/ML model sharing can be implemented through a network entity, such as a RAN Intelligence Controller (RIC), e.g., the O-DU can send the trained AI/ML model to the RIC to be stored, and subsequently another O-DU can retrieve the stored AI/ML model from the RIC to expedite its own training and inference.

While the present disclosure has been described with reference to one or more exemplary embodiments, it will be understood by those skilled in the art that various changes may be made and equivalents may be substituted for elements thereof without departing from the scope of the present disclosure. In addition, many modifications may be made to adapt a particular situation or material to the teachings of the disclosure without departing from the scope thereof. For example, although the example embodiment of the present disclosure have been presented in the context of O-RAN 7-2x-based UL mMIMO systems, the present disclosure is equally applicable to any MIMO and/or mMIMO O-RAN systems with O-RUs that have advanced PHY capabilities. Additional modifications/variations encompassed by the present disclosure include, but are not limited to, the following:
1) Varying the time-domain sparsity of "non-port-reduced DMRS symbols" (e.g., use fewer DMRS symbols) and "non-port-reduced DMRS measurements".
2) Varying the frequency-domain sparsity of "non-port-reduced DMRS symbols" (e.g., transfer one DMRS resource element (RE) per physical resource block (PRB) rather than all the DMRS REs) and "non-port-reduced DMRS measurements".
3) Varying the dimension of "non-port-reduced DMRS symbols" (e.g., select a subset of the TRX ports rather than the full TRX ports of the RU) and "and "non-port-reduced DMRS measurements".
4) Varying the UE-specific and on-demand-based signaling arrangement of (including semi-persistent, periodic, and aperiodic transmissions) "non-port-reduced DMRS symbol" and "non-port-reduced DMRS measurement" transfers/processes.
5) Varying the enabled/disabled other PHY blocks (e.g., whitening filters and dimensionality reduction operations) both at O-RU and O-DU to improve energy and FHBW efficiency.

Therefore, it is intended that the present disclosure not be limited to the particular embodiment(s) disclosed as the best mode contemplated, but that the disclosure will include all embodiments falling within the scope of the appended claims.

For the sake of completeness of disclosure, the following lists of acronyms and definitions are provided:

### ACRONYMS:

∘ 3GPP: Third generation partnership project
∘ BS: Base Station
∘ CA: Carrier Aggregation
∘ CAPEX: Capital Expenditure
∘ CBRS: Citizens Broadband Radio Services
∘ CC: Component carrier
∘ COTS: Commercial off-the-shelf
∘ CP: cyclic prefix
∘ C-plane: Control plane
∘ C-RAN: cloud radio access network
∘ CU: Central unit
∘ DCI: downlink control indicator
∘ DL: downlink
∘ DU: Distribution unit
∘ eAxC ID: Extended Antenna-Carrier identifier: a data flow for a single antenna (or spatial stream) for a single carrier in a single sector.
∘ eNB: Evolved Node B (applies to LTE)
∘ FDD: Frequency-division duplex
∘ FEC: forward error correction
∘ FH: Fronthaul
∘ FFT: Fast Fourier Transform
∘ gNB: gNodeB (applies to NR)
∘ iFFT: inverse Fast Fourier Transform
∘ IQ: in-phase/quadrature
∘ HARQ: hybrid automatic repeat request
∘ LTE: long term evolution
∘ LTE-A: LTE Advanced
∘ M-plane: Management plane
∘ MCS: modulation and coding scheme
∘ MIMO: multiple input, multiple output
∘ MMSE-IRC: Minimum mean square error - interference rejection combining
∘ MMSE-MRC: Minimum mean square error - maximum-ratio combining
∘ mmWave: millimeter wave
∘ MNO: Mobile network operator
∘ NR: New radio
∘ OAM: Operation and management
∘ O-DU: O-RAN Distributed Unit
o O-RU: O-RAN Radio Unit
o O-RAN: Open RAN (Basic O-RAN specifications are prepared by the O-RAN alliance)
∘ OPEX: Operating Expense
o PBCH: Physical Broadcast Channel
∘ PCFICH: Physical Control Format Indicator Channel
∘ PDCCH: Physical downlink Control Channel
∘ PDCP: Packet Data Convergence Protocol
∘ PDSCH: physical downlink shared channel
∘ PHICH: Physical Hybrid ARQ Indicator Channel
∘ PHY: physical layer
∘ LPHY: lower physical layer
∘ UPHY: upper physical layer
∘ PUCCH: Physical Uplink Control Channel
∘ PUSCH: Physical Uplink Shared Channel
∘ QAM: quadrature amplitude modulation
∘ QPSK: Quadrature Phase Shift Keying
∘ RACH: random access channel
∘ PRACH: physical random access channel
∘ RF: radio frequency interface
∘ RLC: Radio Link Control
∘ RRC: Radio Resource Control
∘ RRM: Radio resource management
∘ RRU: Remote radio unit
∘ RU: Radio Unit
∘ RS: reference signal
∘ RSSI: received signal strength indicator
∘ RPC: Remote procedure call
∘ SMO: Service Management and Orchestration
∘ S-plane: Synchronization plane
∘ SCell: Secondary cell
∘ SIMO: single input, multiple output
∘ SINR: signal-to-interference-plus-noise ratio
∘ SRS: Sounding reference signal
∘ SSS: Secondary Synchronization Signal
∘ TB: transport block
∘ TTI: Transmission Time Interval
∘ TDD: Time division duplex
∘ U-plane: User plane
∘ UCI: Uplink Control Information
∘ UE: user equipment
∘ UL: uplink
∘ UL DMRS: uplink demodulation reference signal
∘ ULSCH: Uplink Shared Channel
∘ vBBU: Virtualized baseband unit
∘ VNF: Virtual Network Function

### DEFINITIONS:

∘ Channel: the contiguous frequency range between lower and upper frequency limits.
∘ C-plane: Control Plane: refers specifically to real-time control between O-DU and O-RU, and should not be confused with the UE's control plane.
o DL: Downlink: data flow towards the radiating antenna (generally on the LLS interface).
∘ LLS: Lower Layer Split: logical interface between O-DU and O-RU when using a lower layer (intra-PHY based) functional split.
∘ M-Plane: Management Plane: refers to non-real-time management operations between the O-DU and the O-RU.
o O-CU: O-RAN Control Unit - a logical node hosting PDCP, RRC, SDAP and other control functions.
∘ O-DU: O-RAN Distributed Unit: a logical node hosting RLC/MAC/High-PHY layers based on a lower layer functional split.
∘ O-RU: O-RAN Radio Unit: a logical node hosting Low-PHY layer and RF processing based on a lower layer functional split. This is similar to 3GPP's "TRP" or "RRH" but more specific in including the Low-PHY layer (FFT/iFFT, PRACH extraction).
∘ OTA: Over the Air
∘ S-Plane: Synchronization Plane: refers to traffic between the O-RU or O-DU to a synchronization controller which is generally an IEEE 1588 Grand Master (however, Grand Master functionality may be embedded in the O-DU).
∘ U-Plane: User Plane: refers to IQ sample data transferred between O-DU and O-RU.
o UL: Uplink: data flow away from the radiating antenna (generally on the LLS interface).

## Claims

1. A method for optimizing Open Radio Access Network (O-RAN) system implementing O-RAN split option 7-2x-based uplink (UL) multiple-input multiple-output (MIMO) operation, said method comprising:
providing an artificial intelligence or machine learning (AI/ML) capability comprising an AI/ML model and associated configurations in at least one of an O-RAN Radio Unit (O-RU) and an O-RAN Distributed Unit (O-DU);
determining, by the at least one of the O-RU and the O-DU with the aid of the AI/ML model and associated configurations, at least an initial beamforming method and associated parameters for at least one endpoint associated with the O-RU;
receiving, by the at least one of the O-RU and the O-DU, measurement data from at least other one of the O-RU or the O-DU; and
modifying, by the at least one of the O-RU and the O-DU, at least one of the AI/ML model and the associated configurations based on the received measurement data.

2. The method according to claim 1, further comprising:
transmitting, by the O-DU to the O-RU, the initial beamforming method and associated parameters for at least one endpoint associated with the O-RU;
wherein the AI/ML capability is provided in the O-DU.

3. The method according to claim 2, further comprising:
determining, by the O-DU with the aid of at least one of the modified AI/ML model and the associated configurations, an updated beamforming method and associated parameters for at least one endpoint associated with the O-RU; and
transmitting, by the O-DU, the updated beamforming method and associated parameters for at least one endpoint associated with the O-RU.

4. The method according to claim 1, further comprising:
receiving, by the O-RU from the O-DU, input data comprising at least one of: channel state information, buffer status, resource utilization, O-DU energy consumption, spatial loading information, temporal loading information, spatial relationship knowledge, Block Error Rate (BLER) performance, and scheduling priority;
wherein:
the AI/ML capability is provided in the O-RU;
the initial beamforming method and associated parameters for at least one endpoint associated with the O-RU are determined based on the received input data; and
the received measurement data for modifying the at least one of the AI/ML model and the associated configurations comprise performance results from the O-DU.

5. The method according to claim 1, further comprising:
determining, by the O-DU, i) a first portion of the AI/ML model and associated configurations for the O-RU, and ii) a second portion of the AI/ML model and associated configurations for the O-DU;
transmitting, by the O-DU to the O-RU, the first portion of the AI/ML model and associated configurations for the O-RU; and
transmitting, by the O-DU to the O-RU, the initial beamforming method and associated parameters for at least one endpoint associated with the O-RU;
wherein:
the measurement data from the O-RU are received by the O-DU; and
the O-DU modifies, based on the received measurement data, at least one of i) the first portion of the AI/ML model and associated configurations for the O-RU, and ii) the second portion of the AI/ML model and associated configurations for the O-DU.

6. The method according to claim 1, wherein the AI/ML capability is provided in the O-DU, and wherein the O-DU receives measurement data from a first O-RU and a second O-RU, said method further comprising:
determining, by the O-DU with the aid of the AI/ML model and associated configurations, at least i) a first initial beamforming method and associated parameters for at least one endpoint associated with the first O-RU, and ii) a second initial beamforming method and associated parameters for at least one endpoint associated with the second O-RU;
transmitting, by the O-DU to the first O-RU, the first initial beamforming method and associated parameters for at least one endpoint associated with the first O-RU; and
transmitting, by the O-DU to the second O-RU, the second initial beamforming method and associated parameters for at least one endpoint associated with the second O-RU.

7. The method according to claim 6, further comprising:
determining, by the O-DU with the aid of at least one of the modified AI/ML model and the associated configurations based on aggregated measurement data received from the first O-RU and the second O-RU, at least i) a first updated beamforming method and associated parameters for at least one endpoint associated with the first O-RU, and ii) a second updated beamforming method and associated parameters for at least one endpoint associated with the second O-RU; and
transmitting, by the O-DU, i) to the first O-RU, the first updated beamforming method and associated parameters for at least one endpoint associated with the first O-RU, and ii) to the second O-RU, the second updated beamforming method and associated parameters for at least one endpoint associated with the second O-RU.

8. The method according to claim 1, wherein the AI/ML capability is provided in a first O-DU, said method further comprising:
transmitting, from the first O-DU to a second O-DU, the AI/ML model and associated configurations; and
transmitting, from the second O-DU to the O-RU, the AI/ML model and associated configurations received from the first O-DU.

9. An optimized Open Radio Access Network (O-RAN) system implementing O-RAN split option 7-2x-based uplink (UL) multiple-input multiple-output (MIMO) operation, comprising:
an O-RAN Radio Unit (O-RU);
an O-RAN Distributed Unit (O-DU);
an artificial intelligence or machine learning (AI/ML) module comprising an AI/ML model and associated configurations in at least one of the O-RU and the O-DU;
wherein the at least one of the O-RU and the O-DU is configured to:
i) determine a beamforming method and associated parameters for at least one endpoint associated with the O-RU;
ii) receive measurement data from other one of the O-RU or the O-DU; and
iii) modify at least one of the AI/ML model and the associated configurations based on the received measurement data.

10. The system according to claim 9, wherein:
the O-DU is configured to transmit to the O-RU the initial beamforming method and associated parameters for at least one endpoint associated with the O-RU; and
the AI/ML capability is provided in the O-DU.

11. The system according to claim 10, wherein:
the O-DU is configured to:
i) determine, with the aid of at least one of the modified AI/ML model and the associated configurations, an updated beamforming method and associated parameters for at least one endpoint associated with the O-RU; and
ii) transmit the updated beamforming method and associated parameters for at least one endpoint associated with the O-RU.

12. The system according to claim 9, wherein:
the O-RU is configured to receive from the O-DU input data comprising at least one of: channel state information, buffer status, resource utilization, O-DU energy consumption, spatial loading information, temporal loading information, spatial relationship knowledge, Block Error Rate (BLER) performance, and scheduling priority;
the AI/ML capability is provided in the O-RU;
the initial beamforming method and associated parameters for at least one endpoint associated with the O-RU are determined based on the received input data; and
the received measurement data for modifying the at least one of the AI/ML model and the associated configurations comprise performance results from the O-DU.

13. The system according to claim 9, wherein:
the O-DU is configured to:
a) determine i) a first portion of the AI/ML model and associated configurations for the O-RU, and ii) a second portion of the AI/ML model and associated configurations for the O-DU;
b) transmit to the O-RU the first portion of the AI/ML model and associated configurations for the O-RU; and
c) transmit to the O-RU the initial beamforming method and associated parameters for at least one endpoint associated with the O-RU;
the O-RU is configured to send the measurement data to the O-DU; and
the O-DU is configured to modify, based on the received measurement data, at least one of i) the first portion of the AI/ML model and associated configurations for the O-RU, and ii) the second portion of the AI/ML model and associated configurations for the O-DU.

14. The system according to claim 9, wherein:
the AI/ML capability is provided in the O-DU;
the O-DU is configured to:
a) receive measurement data from a first O-RU and a second O-RU;
b) determine, with the aid of the AI/ML model and associated configurations, at least i) a first initial beamforming method and associated parameters for at least one endpoint associated with the first O-RU, and ii) a second initial beamforming method and associated parameters for at least one endpoint associated with the second O-RU;
c) transmit, to the first O-RU, the first initial beamforming method and associated parameters for at least one endpoint associated with the first O-RU; and
d) transmit, to the second O-RU, the second initial beamforming method and associated parameters for at least one endpoint associated with the second O-RU.

15. The system according to claim 14, wherein the O-DU is configured to:
a) determine, with the aid of at least one of the modified AI/ML model and the associated configurations based on aggregated measurement data received from the first O-RU and the second O-RU, at least i) a first updated beamforming method and associated parameters for at least one endpoint associated with the first O-RU, and ii) a second updated beamforming method and associated parameters for at least one endpoint associated with the second O-RU;
b) transmit, to the first O-RU, the first updated beamforming method and associated parameters for at least one endpoint associated with the first O-RU; and
c) transmit, to the second O-RU, the second updated beamforming method and associated parameters for at least one endpoint associated with the second O-RU.

16. The system according to claim 9, wherein:
i) the AI/ML capability is provided in a first O-DU;
ii) the first O-DU is configured to transmit the AI/ML model and associated configurations to a second O-DU; and
iii) the second O-DU is configured to transmit the AI/ML model and associated configurations received from the first O-DU to the O-RU.
